# EUROPÄISCHE PATENTSCHRIFT

(11) **EP 3 094 686 B1**
(45) Veröffentlichungstag und Bekanntmachung des Hinweises auf die Patenterteilung: **25.11.2020**
(21) Anmeldenummer: 15700201.5
(22) Anmeldetag: 08.01.2015
(51) Int. Cl.: C08L 83/12

(54) **OLIGOMERE ORGANOSILANE, DEREN HERSTELLUNG UND VERWENDUNG IN KAUTSCHUKMISCHUNGEN**
OLIGOMERIC ORGANOSILANES, THE PRODUCTION THEREOF AND THE USE THEREOF IN RUBBER MIXTURES
ORGANOSILANES OLIGOMERES, PRÉPARATION ET UTILISATION DANS DES MÉLANGES DE CAOUTCHOUCS

(30) Priorität: 15.01.2014 DE 102014200563
(43) Veröffentlichungstag der Anmeldung: 23.11.2016
(73) Patentinhaber: Evonik Operations GmbH, 45128 Essen (DE)
(72) Erfinder: BLUME, Anke, 53919 Weilerswist (DE); MOSER, Ralph, Jersey City, NJ 07310 (US); ROSENSTINGL, Sebastian, 79618 Rheinfelden (DE)
(74) Vertreter: Evonik Patent Association
(86) Internationale Anmeldenummer: PCT/EP2015/050242
(87) Internationale Veröffentlichungsnummer: WO 2015/107000

(56) Entgegenhaltungen:
- EP-A1- 1 829 922
- EP-A2- 0 964 021
- EP-A2- 1 273 613
- DE-A1-102004 049 427
- JP-A- 2002 047 416
- JP-A- 2002 147 890

## Beschreibung

Die vorliegende Erfindung betrifft oligomere Organosilane, ein Verfahren zu deren Herstellung sowie deren Verwendung in Kautschukmischungen.

Es ist bekannt, schwefelhaltige Organosiliciumverbindungen wie 3-Mercaptopropyltrimethoxysilan oder Bis-(3-[Triethoxy-silyl]-propyl)tetrasulfan als Silanhaftvermittler oder Verstärkungsadditiv in oxidisch gefüllten Kautschukmischungen einzusetzen, unter anderem für Laufflächen und andere Teile von Autoreifen (DE 2 141 159, DE 2 212 239, US 3 978 103, US 4 048 206).

Aus EP 0 784 072 A1 sind Kautschukmischungen auf der Basis mindestens eines Elastomers mit Kieselsäure als Füllstoff und einem Verstärkungsadditiv bekannt, das durch Abmischung oder als < in situ > Reaktionsprodukt aus wenigstens einer funktionellen Polyorganosiloxanverbindung hergestellt wird und die als weiteren Bestandteil ein funktionelles Organosilan enthalten. Als monomere Bausteine werden insbesondere 3-Mercaptopropyltrialkoxysilane oder Bis(trialkoxysilylpropyl)tetrasulfane verwendet, die jeweils 3 bzw. 6 Alkoxysubstituenten tragen.

Desweiteren sind aus EP 0964021 oligomere Organosilanpolysulfane bekannt, die nicht zu einem Feststoff polykondensiert sind und die Struktureinheiten A und/oder B und/oder C in beliebiger linearer, verzweigter oder zyklischer Anordnung 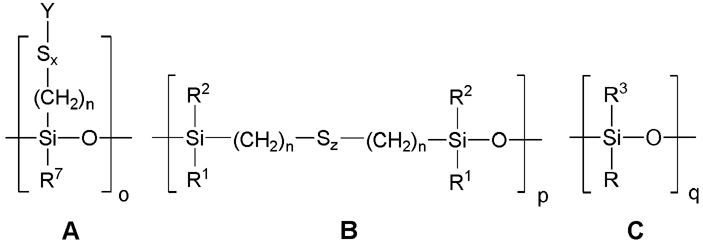 enthalten.

Aus WO 2006/037380, EP 0997489 und EP 1273613 sind ebenfalls oligomere Organosilane bekannt.

Nachteil der bekannten Oligo-/Polysiloxane ist die schlechte Verarbeitbarkeit und der schlechte Weiterreißwiderstand.

Aufgabe der vorliegenden Erfindung ist es, oligomere Organosilane zur Verfügung zu stellen, die verbesserte Verarbeitbarkeit und/oder Weiterreißwiderstand aufweisen. Gegenstand der Erfindung sind oligomere Organosilane, enthaltend mindestens zwei unterschiedliche Struktureinheiten innerhalb eines Moleküls ausgewählt aus den Struktureinheiten A, B, C oder D verknüpft in beliebiger linearer, verzweigter oder zyklischer Anordnung 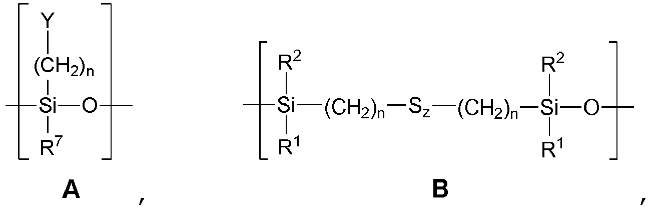 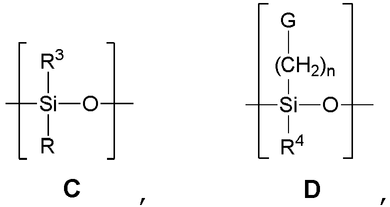
wobei Y = SH oder -Sₓ- (CH₂)ₙSiRR¹R²
R⁸ gleich oder verschieden sind, H, (C₁-C₁₆) Alkyl, vorzugsweise C₄-Alkyl, - (CH₂)₂NH₂, - (CH₂)₂NH-(CH₂)₂NH₂ oder - (CH₂)₂N[(CH₂)₂NH₂]₂,
mit n = 1-8, vorzugsweise n = 2 oder 3,
G = SH oder -Sₓ-(CH₂)ₙSiRR¹R²
wobei G ungleich Y ist,
R, R¹, R², R³, R⁴, unabhängig voneinander, OH, (C₁-C₁₆) Alkyl, vorzugsweise Methyl oder Ethyl, (C₂-C₁₆)Alkenyl, vorzugsweise C₂-Alkenyl, (C₆-C₁₄)Aryl, (C₁-C₄)Alkoxy, vorzugsweise Methoxy oder Ethoxy, eine OSiR¹R²R³-Gruppe oder eine Alkylpolyethergruppe -O-(R⁵-O)ₘ-R⁶, mit R⁵ gleich oder verschieden, eine verzweigte oder unverzweigte, gesättigte oder ungesättigte, aliphatische zweibindige C1-C30 Kohlenwasserstoffgruppe, vorzugsweise -(CH₂)₂-, -(CH₂)₃- oder -(CH₂C(CH₃)H)-, m im Mittel 1 bis 30, vorzugsweise 3 bis 8, besonders bevorzugt 5, und R⁶ eine unsubstituierte oder substituierte, verzweigte oder unverzweigte C₁-C₃₀ Alkyl-, vorzugsweise eine C₁₁-C₁₉ Alkylgruppe, C₂-C₃₀ Alkenyl-, bevorzugt eine C₂ Alkenylgruppe, eine C₆-C₁₄ Arylgruppe, oder eine C₇-C₄₀ Aralkylgruppe ist,
x im statistischen Mittel 1 - 6, vorzugsweise 2 - 4,
z im statistischen Mittel 1 - 6, vorzugsweise 2 - 4, welche dadurch gekennzeichnet sind, dass R⁷ eine Alkylpolyethergruppe - O-(R⁵-O)ₘ-_{R}⁶ ist, und das oligomere Organosilan die Struktureinheiten A und B und C, A und B, A und D, A und C und D oder A und C enthält.

Die Alkylpolyethergruppe kann vorzugsweise -O-(CH₂CH₂-O)ₘ-R⁶, besonders bevorzugt -O-(CH₂CH₂-O)₅-R⁶, ganz besonders bevorzugt -O-(CH₂CH₂-O)₅-C₁₃H₂₇, sein.

Die relative Molmasse, gemessen mit GPC, der erfindungsgemäßen oligomeren Organosilane in Bezug zu einem Standard, bestehend aus einer Mischung von Siloxanen des Vinyltrimethoxysilans, ist zwischen 400 und 100000 g/mol, und kann vorzugsweise zwischen 450 und 50000 g/mol, besonders bevorzugt zwischen 600 und 10000 g/mol, sein.

Das oligomere Organosilan kann die Struktureinheiten A und B und C enthalten, wobei R⁷ gleich einer Alkylpolyethergruppe -O-(R⁵-O)ₘ-R⁶,vorzugsweise mit R⁵ = - CH₂CH₂-, m = 5 und R⁶ = -C₁₃H₂₇, ist. Dabei kann in der Struktureinheit A, n = 3, Y = SH, in der Struktureinheit B, R¹ = Ethoxy oder Alkylpolyethergruppe -O-(R⁵-O)ₘ-R⁶, R² = Ethoxy oder Alkylpolyethergruppe -O-(R⁵-O)ₘ-R⁶, n = 3, z = 2-4, und in der Struktureinheit C, R = Phenyl, Propyl oder Oktyl und R³ = Ethoxy oder Alkylpolyethergruppe -O-(R⁵-O)ₘ-R⁶ sein. Das molare Verhältnis des molaren Anteils der Struktureinheit A zur Summe der molaren Anteile der Struktureinheiten B und C kann größer eins sein.

Das oligomere Organosilan kann die Struktureinheiten A und B enthalten, wobei R⁷ gleich einer Alkylpolyethergruppe -O-(R⁵-O)ₘ-R⁶, vorzugsweise mit R⁵ = -CH₂CH₂-, m = 5 und R⁶ = - C₁₃H₂₇, ist. Dabei kann in der Struktureinheit A, n = 3, Y = SH und in der Struktureinheit B, R¹ = Ethoxy oder Alkylpolyethergruppe -O-(R⁵-O)ₘ-R⁶, R² = Ethoxy oder Alkylpolyethergruppe -O-(R⁵-O)ₘ-R⁶, n = 3, z = 2-4 sein. Das molare Verhältnis des molaren Anteils der Struktureinheit A zum molaren Anteil der Struktureinheit B kann größer eins sein.

Das oligomere Organosilan kann die Struktureinheiten A und C enthalten, wobei R⁷ gleich einer Alkylpolyethergruppe -O-(R⁵-O)ₘ-R⁶, vorzugsweise mit R⁵ = -CH₂CH₂-, m = 5 und R⁶ = - C₁₃H₂₇, ist. Dabei kann in der Struktureinheit A, n = 3, Y = SH und in der Struktureinheit C, R = Phenyl, Propyl oder Oktyl, R³ = Ethoxy oder Alkylpolyethergruppe -O-(R⁵-O)ₘ-R⁶ sein. Das molare Verhältnis des molaren Anteils der Struktureinheit A zum molaren Anteil der Struktureinheit C kann größer eins sein.

Das oligomere Organosilan kann die Struktureinheiten A und C und D enthalten, wobei R⁷ gleich einer Alkylpolyethergruppe -O-(R⁵-O)ₘ-R⁶ ,vorzugsweise mit R⁵ = - CH₂CH₂-, m = 5 und R⁶ = -C₁₃H₂₇, ist. Dabei kann in der Struktureinheit A, n = 3, Y = SH, in der Struktureinheit C, R = Phenyl, Propyl oder Oktyl und R³ = Ethoxy oder Alkylpolyethergruppe -O-(R⁵-O)ₘ-R⁶ und in der Struktureinheit D, G = Cl oder NH₂, n = 3, R⁴ = Ethoxy oder Alkylpolyethergruppe -O-(R⁵-O)ₘ-R⁶ sein. Das molare Verhältnis des molaren Anteils der Struktureinheit A zur Summe der molaren Anteile der Struktureinheiten C und D kann größer eins sein.

Das oligomere Organosilan kann die Struktureinheiten A und D enthalten, wobei R⁷ gleich einer Alkylpolyethergruppe -O-(R⁵-O)ₘ-R⁶, vorzugsweise mit R⁵ = -CH₂CH₂-, m = 5 und R⁶ = - C₁₃H₂₇, ist. Dabei kann in der Struktureinheit A, n = 3, Y = SH, und in der Struktureinheit D, G = Cl oder NH₂, n = 3, R⁴ = Ethoxy oder Alkylpolyethergruppe -O-(R⁵-O)ₘ-R⁶ sein. Das molare Verhältnis des molaren Anteils der Struktureinheit A zum molaren Anteil der Struktureinheit D kann größer eins sein.

Die erfindungsgemäßen oligomeren Organosilane können dabei über Y zyklisch, verzweigt oder linear ausgebildet sein.

Die erfindungsgemäßen Verbindungen können sowohl als einzelne Verbindung mit einem definierten Molekulargewicht, als auch als Oligomerengemisch mit einer Molekulargewichtsverteilung vorliegen.

Das molare Verhältnis der Alkylpolyethergruppe -O-(R⁵-O)ₘ-R⁶ zu Silicium in dem oligomeren Organosilan kann > 0 und <= 2,0, vorzugsweise > 0,1 und <= 1,0, sein. Das molare Verhältnis der Alkylpolyethergruppe -O-(R⁵-O)ₘ-R⁶ zu Silicium kann durch den molaren Anteil der Alkylpolyethergruppe -O-(R⁵-O)ₘ-R⁶ und den molaren Anteil an Silicium ermittelt werden. Der molare Anteil der Alkylpolyethergruppe -O-(R⁵-O)ₘ-R⁶ kann durch eine dem Fachmann bekannte ¹³C-NMR Spektroskopie Methode unter Verwendung eines internen Standards bestimmt werden. Der interne Standard kann Dimethylterephthalat, Naphthalin, oder weitere dem Fachmann bekannte interne Standards für die NMR Spektroskopie sein. Der molare Anteil an Silicium kann mit Hilfe einer dem Fachmann bekannten Methode zur Bestimmung des Si-Gehaltes ermittelt werden (zum Beispiel ASTM 6740).

Ein weiterer Gegenstand der Erfindung ist ein Verfahren zur Herstellung der erfindungsgemäßen oligomeren Organosilane, welches dadurch gekennzeichnet ist, dass man in einem ersten Verfahrensschritt die Verbindungen der Formel I-IV 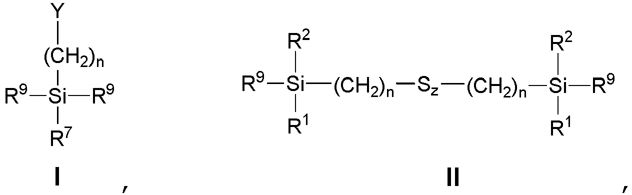 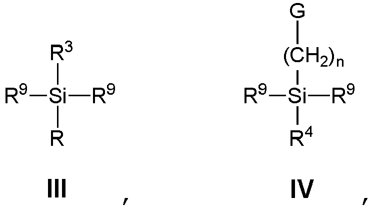 entsprechend dem molaren Verhältnis in Gegenwart von Wasser bei Temperaturen von 0-150°C, vorzugsweise von 20-130°C, besonders bevorzugt 80-120°C, oligomerisiert/polymerisiert, wobei Y, G, R, R¹, R², R³, R⁴, R⁵, R⁶, R⁷, R⁸, n, m, u, x und z die gleiche Bedeutung haben, wie oben definiert, und R⁹ gleich H, F, Cl, Br, I, (C₁-C₁₆) Alkoxy, vorzugsweise Methoxy oder Ethoxy, ist,
und in einem zweiten Verfahrensschritt mit einem Alkylpolyetheralkohol der Formel HO-(R⁵-O)ₘ-R⁶ umsetzt.

Das erfindungsmäßige Verfahren kann im ersten und im zweiten Verfahrensschritt in Gegenwart eines Katalysators durchgeführt werden. Dabei kann der Katalysator im ersten und zweiten Verfahrensschritt gleich oder verschieden sein. Der Katalysator kann dabei in katalytischen oder stöchiometrischen Mengen zugesetzt werden. Dabei sind alle Arten von sauren, basischen oder nukleophilen Katalysatoren, die dem Fachmann von der SOLGEL-Chemie von Alkoxysilanen bekannt sind (siehe z.B. R. Corriu, D. Leclercq, Angew. Chem. 1996, 108, 1524-1540), auch für die Oligomerisierung im Sinne der Erfindung geeignet. Dabei spielt es keine Rolle, ob die Katalysatoren in gleicher Phase wie die Reaktionslösung vorliegen (homogene Katalyse) oder als Feststoffe vorliegen (heterogene Katalyse) und nach beendeter Reaktion abgetrennt werden.

Bevorzugt kann die homogene Katalyse mit einer Lewissäure, wie beispielsweise Tetrabutylorthotitanat oder nukleophil mit Ammoniumfluorid oder heterogen mit Aluminiumoxid durchgeführt werden. Die basische Katalyse kann beispielsweise mit einer organischen Base wie Triethylamin, Tetramethylpiperidin, Tributylamin oder Pyridin oder mit einer anorganischen Base wie NaOH, KOH, Ca(OH)₂, Na₂CO₃, K₂CO₃, CaCO₃, CaO, NaHCO₃, KHCO₃ oder Alkoholaten wie NaOCH₃ oder NaOC₂H₅ erfolgen. Die nukleophile Katalyse kann mit beliebigen Fluoriden geschehen, beispielsweise Ammoniumfluorid, Natriumfluorid, Kaliumfluorid oder beliebigen Tetraalkylammoniumfluoriden wie Tetrabutylammoniumfluorid. Die saure Katalyse kann mit verdünnten wäßrigen Mineralsäuren oder Lösungen von Lewissäuren in Wasser erfolgen. Bevorzugt kann die Katalyse mit verdünnter wäßriger HCl oder Schwefelsäure erfolgen, wobei 0,1 mol-% Katalysator auf die eingesetzte Silanmenge verwendet wird.

Ganz bevorzugt kann als Katalysator Tetrabutylorthotitanat, KOH, NaOH, Ammoniumfluorid oder HCl eingesetzt werden.

Insbesondere bevorzugt kann in dem ersten Verfahrensschritt HCl und im zweiten Verfahrensschritt Tetrabutylorthotitanat als Katalysator eingesetzt werden.

Das erfindungsmäßige Verfahren kann in Gegenwart eines Lösungsmittels durchgeführt werden.

Die Oligomerisations-/Polymerisationsreaktion erfolgt bei Zugabe von Wasser unter Abspaltung von Alkohol, Halogenwasserstoff oder Wasserstoff und kann dabei in Substanz oder in einem inerten organischen Lösungsmittel oder Gemischen davon, wie beispielsweise in einem aromatischen Lösungsmittel wie Chlorbenzol, einem halogenierten Kohlenwasserstoff, wie Chloroform, Methylenchlorid, einem Ether wie Diisopropylether, tert. Butylmethylether, Tetrahydrofuran oder Diethylether, Acetonitril oder Carbonsäureester, beispielsweise Essigsäureethylester, Essigsäuremethylester oder Essigsäureisopropylester, einem Alkohol, beispielsweise Methanol, Ethanol, n-Propanol, i-Propanol, n-Butanol, sec. Butanol oder tert. Butanol, durchgeführt werden. Bevorzugte Lösungsmittel sind dabei Ethanol oder Essigsäureethylester. Der zweite Verfahrensschritt kann ohne weitere Zugabe eines Löungsmittels durchgeführt werden.

Die Verbindungen der Formel I können beispielsweise 3-Mercaptopropyltrimethoxysilan, 3-Mercaptopropyltriethoxysilan, Bis-(3-[Triethoxysilyl]-propyl)disulfan, Bis-(3-[Triethoxysilyl]-propyl)trisulfan, oder Bis-(3-[Triethoxysilyl]-propyl)tetrasulfan, sein.

Die Verbindungen der Formel II können beispielsweise Bis-(3-[Triethoxysilyl]-propyl)disulfan, Bis-(3-[Triethoxysilyl]-propyl)trisulfan oder Bis-(3-[Triethoxysilyl]-propyl)tetrasulfan sein.

Die Verbindungen der Formel III können beispielsweise Methyltrimethoxysilan,
Methyltriethoxysilan,
Phenyltrimethoxysian,
Phenyltriethoxysian,
Propyltrimethoxysilan,
Propyltriethoxysilan,
Oktyltrimethoxysilan,
Oktyltriethoxysilan,
Hexadecyltrimethoxysilan,
Hexadecyltriethoxysilan,
Dimethyldimethoxysilan,
Dimethyldiethoxysilan oder
Dichlordimethylsilan sein.

Die Verbindungen der Formel IV können beispielsweise 3-Mercaptopropyltrimethoxysilan, 3-Mercaptopropyltriethoxysilan, Bis-(3-[Triethoxysilyl]-propyl)disulfan, Bis-(3-[Triethoxysilyl]-propyl)trisulfan, oder Bis-(3-[Triethoxysilyl]-propyl)tetrasulfan, sein.

Nach erfolgter Reaktion können die leichtflüchtigen Bestandteile in einer dem Fachmann bekannter Weise, vorzugsweise durch Destillation entfernen werden. Der Katalysator kann deaktiviert, vorzugsweise durch Neutralisation, oder entfernt, vorzugsweise durch Filtration, werden.

Ein weiterer Gegenstand der Erfindung ist die Verwendung der erfindungsgemäßen Organosilane in Kautschukmischungen. Ein weiterer Gegenstand der Erfindung sind Kautschukmischungen, die die erfindungsgemäßen oligomeren Organosilane enthalten. Die erfindungsgemäßen Kautschukmischungen können zur Herstellung von Formkörpern, insbesondere Luftreifen oder Reifenlaufflächen, eingesetzt werden.

Die erfindungsgemäßen Kautschukmischungen können Kautschuk, Füllstoff, vorzugsweise gefällte Kieselsäure, ggf. weitere Kautschukhilfsmittel, sowie mindestens ein oligomeres Organosilan, enthalten. Die oligomeren Organosilane können in Mengen von 0,1 bis 15 Gew-% bezogen auf die Menge des eingesetzten Kautschuks, eingesetzt werden.

Durch die Verwendung der erfindungsgemäßen oligomeren Organosilane in Kautschukmischprozessen reduziert sich deutlich die unangenehme Alkoholfreisetzung aufgrund der bereits erfolgten Vorkondensation. Verglichen mit der üblichen Arbeitsweise, beispielsweise durch einfache Verwendung von Bis-(3-[Triethoxysilyl]-propyl)-tetrasulfan (TESPT) als Haftvermittler verringert sich die Alkoholentwicklung während des Mischprozesses.

Die Zugabe der erfindungsgemäßen oligomeren Organosilane sowie die Zugabe der Füllstoffe erfolgt bevorzugt bei Massetemperaturen von 100 bis 200 °C, sie kann jedoch auch später bei tieferen Temperaturen (40 bis 100 °C), z.B. zusammen mit weiteren Kautschukhilfsmitteln erfolgen.

Die oligomeren Organosilane können sowohl in reiner Form als auch aufgezogen auf einen inerten organischen oder anorganischen Träger dem Mischprozeß zugegeben werden. Bevorzugte Trägermaterialien sind Kieselsäuren, natürliche oder synthetische Silikate, Aluminiumoxid oder Ruße.

Als Füllstoffe können für die erfindungsgemäßen Kautschukmischungen eingesetzt werden:
- Ruße: Die hierbei zu verwendenden Ruße sind nach dem Flammruß-, Furnace- oder Gasruß-Verfahren hergestellt und besitzen BET-Oberflächen von 20 bis 200 m²/g, wie z.B.SAF-,ISAF-, HSAF-, HAF-, FEF- oder GPF-Ruße. Die Ruße können ggf. auch Heteroatome wie z.B. Si enthalten.
- Kieselsäuren, vorzugsweise gefällte Kieselsäuren, beispielsweise hergestellt durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate wie Magnesiumsilikat oder - Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Glasfasern und Glasfaserprodukte (Matten, Stränge) oder Mikroglaskugeln.

Bevorzugt können Ruße mit BET-Oberflächen von 20 bis 400 m²/g oder hochdisperse Kieselsäuren, hergestellt durch Fällung von Lösungen von Silikaten, mit BET-Oberflächen von 20 bis 400 m²/g in Mengen von 5 bis 150 Gew.-Teilen, jeweils bezogen auf 100 Teile Kautschuk, eingesetzt werden.

Die genannten Füllstoffe können alleine oder im Gemisch eingesetzt werden. In einer besonders bevorzugten Ausführung des Verfahrens können 10 bis 150 Gew.-Teile helle Füllstoffe, gegebenenfalls zusammen mit 0 bis 100 Gew.-Teilen Ruß, sowie 0,3 bis 10 Gew.-Teile eines erfindungsgemäßen oligomeren Organosilans, jeweils bezogen auf 100 Gew.-Teile Kautschuk, zur Herstellung der Mischungen eingesetzt werden.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u. a.
- Polybutadien (BR)
- Polyisopren (IR)
- Styrol/Butadien-Copolymerisate mit Styrolgehalten von 1 bis 60, vorzugsweise 2 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)
sowie Mischungen dieser Kautschuke. Für die Herstellung von Kfz-Reifen sind insbesondere anionisch polymerisierte L-SBR-Kautschuke mit einer Glastemperatur oberhalb von -50 °C sowie deren Mischungen mit Dienkautschuken von Interesse.

Die erfindungsgemäßen Kautschukvulkanisate können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk. Die oligomeren Organosilane können alleine als Vernetzer dienen. In der Regel empfiehlt sich die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide können in Mengen von 0,1 bis 10 Gew.-%, bevorzugt 0.1 bis 5 Gew.-%, bezogen auf Kautschuk, eingesetzt werden.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und den erfindungsgemäßen oligomeren Organosilanen kann in üblichen Mischaggregaten, wie Walzen, Innenmischern und Mischextrudern, durchgeführt werden. Die erfindungsgemäßen Kautschukvulkanisate eignen sich zur Herstellung von Formkörpern. Die erfindungsgemäßen Kautschukmischungen können zur Herstellung von Reifen, Profile, Kabelmänteln, Schläuchen, Treibriemen, Förderbänder, Reifenbeläge, Schuhsohlen, Dichtungsringe und Dämpfungselemente verwendet werden.

Ein weiterer Gegenstand der Erfindung sind oligomere Organosilane erhältlich nach dem erfindungsgemäßen Verfahren.

Die erfindungsgemäßen oligomeren Organosilane haben in Kautschukmischungen den Vorteil der verbesserten Verarbeitbarkeit und/oder verbesserten Weiterreißwiderstand.

Zur Bestimmung der SH- (Mercapto), S2- (Disulfan), S3-(Trisulfan), Sx- (Polysulfan mit x >3) Verteilung kann die dem Fachmann bekannte ¹H-NMR Spektroskopie verwendet werden.

Zur Bestimmung des molaren Anteils an SiOEt und SiOR Gruppen kann die dem Fachmann bekannte ¹³C-NMR Spektroskopie verwendet werden.

Ferner kann zur Bestimmung des Monomerengehalts sowie von M-, D- und T-Strukturen dem Fachmann ebenfalls wohl bekannte ²⁹Si-NMR Spektroskopie eingesetzt werden.

Die Bestimmung von relativen Molmassen sowie der Molmassenverteilung kann mittels Gelpermeationschromatographie (GPC) erfolgen. Das GPC-Analyseverfahren wird u.a. in "Modern Size-Exclusion Liquid Chromatography", Andre Striegel et al, Verlag Wiley & Sons, 2. Aufl. 2009, ausführlich beschrieben. Dabei wird zur Kalibrierung der Methode für Siloxananalysen als Standard beispielsweise eine Mischung von Siloxanen des Vinyltrimethoxysilans (Vinyltrimethoxysilan, Divinyltetramethoxydisiloxan, Trivinylhexamethoxytrisiloxan, Tetravinyloctamethoxytetrasiloxan) verwendet. Verwendete Säulen (MZ-Analysetechnik): Säulen: 50x8.0 mm, MZ-Gel SDplus (Styrol-/Divinylbenzol-Copolymer mit hohem Vernetzungsgrad, spärische Teilchenform), Porosität 50A (Angstroem, Å), 5 µm (Mikrometer) (Vorsäule), 300x8.0 mm, MZ-Gel SDplus, Porosität 100A (Angstroem, Å), 5 µm, 300x8.0 mm, MZ-Gel SDplus, Porosität 500A (Angstroem, Å), 5 µm; Elutionsmittel und Pumpenfluss: Methylethylketon (MEK) bei 1 ml/min, Standardsubstanz: Interner Standard - 1 g/l Ethylbenzol in 1%iger Proben-Lösung. Das Messgerät wird zuvor gegen eine geeignete Substanz kalibriert (Monomer, Dimer, Trisiloxan, etc.). Messgerät (Agilent): 1100 Series isokratische Pumpe G1310A, 1100 Series Säulenofen G1316A, 1100 Series RID Detektor G1362A, Manueller Injektor G1328A, Vakuum Degasser G1322A, GPC-Software (PSS WinGPC Unity).

### Beispiele

Oktyltriethoxysilan, Propyltriethoxysilan, Dynasylan® 9265 (Phenyltriethoxysilan), Si 69® (Bis(triethoxysilylpropyl)tetrasulfid) und VP Si 263® (3-Mercaptopropyltriethoxysilan) sind Silane der Firma Evonik Industries.

Marlosol ist ein Polyetheralkohol der Formel HO-(R⁵-O)ₘ-R⁶ mit R⁵ = CH₂CH₂, R⁶ = C₁₃H₂₇ und m = 5 der Firma Sasol.

### Beispiel 1

Herstellung aus VP Si 263® / Oktyltriethoxysilan / Marlosol (1:0,5:0,5) - 0,8 eq H₂O

In einer Rührapparatur werden VP Si 263® (417 g) und Oktyltriethoxysilan (242 g) vorgelegt und auf 85°C erwärmt. Eine Mischung aus H₂O (38 g) und konz. HCl (0,3 g, 37%ig) in EtOH (363 g) wird zugetropft und danach für 8,5 h gerührt. Nach beendeter Oligomerisierungsreaktion wird das Lösungsmittel und der entstandene Hydrolysealkohol unter Vakuum entfernt. Marlosol (368 g) und Tetra-n-butyltitanat (0,5 g) werden zugegeben und die Reaktion für 1 h auf 140°C erwärmt. Das entstehende EtOH wird destillativ unter vermindertem Druck entfernt. Das Sumpfprodukt (793 g, 95% d. Th.) ist eine viskose, orange-farbene Flüssigkeit. Dichte (20°C): 1,012 g/cm³ 29Si-NMR: 3% Silan (VP Si 263®, Oktyltriethoxysilan), 49% M-Strukturen, 40% D-Strukturen, 9% T-Strukturen GPC: Mn = 967 g/mol, Mw = 1234, Mz = 1536, PDI = 1,2761 Molare Verhältnis der Alkylpolyethergruppe -O-(R⁵-O)ₘ-R⁶ zu Silicium = 0,33

### Beispiel 2

Herstellung aus VP Si 263® / Propyltriethoxysilan / Marlosol (1:0,5:0,5) - 0,8 eq H₂O

In einer Rührapparatur werden VP Si 263® (417 g) und Propyltriethoxysilan (181 g) vorgelegt und auf 85°C erwärmt. Eine Mischung aus H₂O (38 g) und konz. HCl (0,3 g, 37%ig) in EtOH (363 g) wird zugetropft und danach für 8 h gerührt. Nach beendeter Oligomerisierungsreaktion wird das Lösungsmittel und der entstandene Hydrolysealkohol unter Vakuum entfernt. Marlosol (368 g) und Tetra-n-butyltitanat (0,5 g) werden zugegeben und die Reaktion für 1 h auf 140°C erwärmt. Das entstehende EtOH wird destillativ unter vermindertem Druck entfernt. Das Sumpfprodukt (751 g, 94% d. Th.) ist eine viskose, farblose Flüssigkeit. Dichte (20°C): 1,029 g/cm³

13C-NMR: 78,6 mol% SiOEt, 21,4 mol% SiOR 29Si-NMR: <1% Silan (VP Si 263®, Propyltriethoxysilan), 60% M-Strukturen, 35% D-Strukturen, 4% T-Strukturen GPC: Mn = 757 g/mol, Mw = 1066, Mz = 1417, PDI = 1,4082 Molare Verhältnis der Alkylpolyethergruppe -O-(R⁵-O)ₘ-R⁶ zu Silicium = 0,33

### Beispiel 3

Herstellung aus VP Si 263® / Phenyltriethoxysilan (Dynasylan® 9265) / Marlosol (1:0,5:0,5) - 0,8 eq H₂O In einer Rührapparatur werden VP Si 263® (417 g) und Dynasylan® 9265 (210 g) vorgelegt und auf 88°C erwärmt. Eine Mischung aus H₂O (38 g) und konz. HCl (0,3 g, 37%ig) in EtOH (363 g) wird zugetropft und danach für 6 h gerührt. Nach beendeter Oligomerisierungsreaktion wird das Lösungsmittel und der entstandene Hydrolysealkohol unter Vakuum entfernt. Marlosol (368 g) und Tetra-n-butyltitanat (0,5 g) werden zugegeben und die Reaktion für 1 h auf 140°C erwärmt. Das entstehende EtOH wird destillativ unter vermindertem Druck entfernt. Das Sumpfprodukt (797 g, 99% d. Th.) ist eine viskose, leicht gelbe Flüssigkeit. Dichte (20°C): 1,050 g/cm³
29Si-NMR: 3% VP Si 263®, 1% Dynasylan® 9265, 51% M-Strukturen, 37% D-Strukturen, 8% T-Strukturen
GPC: Mn = 770 g/mol, Mw = 1013, Mz = 1300, PDI = 1,3156 Molare Verhältnis der Alkylpolyethergruppe -O-(R⁵-O)ₘ-R⁶ zu Silicium = 0,33

### Beispiel 4

Erfindungsgemäß: Herstellung aus VP Si 263® / Si 69® / Marlosol (1:0,5:0,5) - 0,8 eq H₂O

In einer Rührapparatur werden VP Si 263® (417 g) und Si 69® (466 g) vorgelegt und auf 98°C erwärmt. Eine Mischung aus H₂O (38 g) und konz. HCl (0,3 g, 37%ig) in EtOH (363 g) wird zugetropft und danach für 8 h gerührt. Nach beendeter Oligomerisierungsreaktion wird das Lösungsmittel und der entstandene Hydrolysealkohol unter Vakuum entfernt. Marlosol (368 g) und Tetra-n-butyltitanat (0,5 g) werden zugegeben und die Reaktion für 1 h auf 140°C erwärmt. Das entstehende EtOH wird destillativ unter vermindertem Druck entfernt. Das Sumpfprodukt (1028 g, 98% d. Th.) ist eine viskose, gelbe Flüssigkeit.
Dichte (20°C): 1,082 g/cm³
1H-NMR: 40 mol% SH, 22 mol% S2, 27 mol% S3, 11 mol% Sx 13C-NMR: 87,5 mol% SiOEt, 22,5 mol% SiOR 29Si-NMR: 9% Silan, 72% M-Strukturen, 19% D-Strukturen GPC: Mn = 1317 g/mol, Mw = 5501, Mz = 12291, PDI = 4,1778 Molare Verhältnis der Alkylpolyethergruppe -O-(R⁵-O)ₘ-R⁶ zu Silicium = 0,33

### Vergleichsbeispiel 5

Referenz gemäß EP 0964021: Herstellung aus Si 69® / PTEO (1:5) - 0,8 eq H₂O

In einer Rührapparatur werden Si 69® (240 g) und PTEO (464 g) vorgelegt und auf 75°C erwärmt. Eine Mischung aus H₂O (45 g) und konz. HCl (0,5 g, 37%ig) in EtOH (436 g) wird zugetropft und danach für 12 h gerührt. Nach beendeter Oligomerisierungsreaktion wird das Lösungsmittel und der entstandene Hydrolysealkohol unter Vakuum entfernt. Das Sumpfprodukt (518 g, >99% d.Th.) ist eine viskose, gelbe Flüssigkeit.
29Si-NMR: 0% Silan PTEO, 0,4% Silan Si 69®, 1% M-Strukturen von PTEO, 69% M-Strukturen von Si 69 + D-Strukturen von PTEO, 28% D-Strukturen von Si 69® + T-Strukturen von PTEO, 1% T-Strukturen von Si 69®
GPC: Mn = 871 g/mol, Mw = 1473, Mz = 2337, PDI = 1,6916

### Beispiel 6

Die für die Kautschukmischungen verwendete Rezeptur ist in der folgenden Tabelle 1 angegeben. Dabei bedeutet die Einheit phr Gewichtsanteile bezogen auf 100 Teile des eingesetzten Rohkautschuks. Die oligomeren Silane werden, bezogen auf das in-situ eingesetzte Silan, isomolar eingesetzt. Die Mischungen werden in einem 1,5 l Mischer (E-Typ) bei einer Batch-Temperatur von 155°C hergestellt.

**Tabelle 1**

| Substanz | Menge [phr] | Menge [phr] | Menge [phr] | Menge [phr] | Menge [phr] | Menge [phr] | Menge [phr] |
|---|---|---|---|---|---|---|---|
| 1. Stufe | Ref. kautschukmischung I "in situ" | Ref. kautschukmischung II, "in-situ" | Ref. kautschukmischung III, Vergl.-beisp.5 | Erf. Kautschukmischung I, enth. erf. Beisp.1 | Erf. Kautschukmischung II, enth. erf.-Beisp.2 | Erf. Kautschukmischung III, enth. erf. Beisp.3 | Erf. Kautschukmischung IV, enth. erf.-Beisp.4 |
| Buna VSL 5025-2 | 96,25 | 96,25 | 96,25 | 96,25 | 96,25 | 96,25 | 96,25 |
| Buna CB 24 | 30 | 30 | 30 | 30 | 30 | 30 | 30 |
| Ultrasil 7000 GR | 80 | 80 | 80 | 80 | 80 | 80 | 80 |
| ZnO RS | 2 | 2 | 2 | 2 | 2 | 2 | 2 |
| Edenor ST1 | 1 | 1 | 1 | 1 | 1 | 1 | 1 |
| Vivatec 500 | 8,75 | 8,75 | 8,75 | 8,75 | 8,75 | 8,75 | 8,75 |
| Rhenogran DPG-80 | 2,5 | 2,5 | 2,5 | 2,5 | 2,5 | 2,5 | 2,5 |
| Protector G 3108 | 2 | 2 | 2 | 2 | 2 | 2 | 2 |
| Vulkanox-4020/LG | 2 | 2 | 2 | 2 | 2 | 2 | 2 |
| Vulkanox-HS/LG | 1,5 | 1,5 | 1,5 | 1,5 | 1,5 | 1,5 | 1,5 |
| Aktiplast ST | 3,5 | 3,5 | 3,5 | 3,5 | 3,5 | 3,5 | 3,5 |
| Si 69® | 6,4 | - | - | - | - | - | - |
| VP Si 363® | - | 10 | - | - | - | - | - |
| Referenz-Silan gemäß Vergl.-beisp. 5 | - | - | 3,1 | - | - | - | - |
| Erf. Silan gemäß Beisp. 1 | - | - | - | 6,0 | - | - | - |
| Erf. Silan gemäß Beisp. 2 | - | - | - | - | 5,6 | - | - |
| Erf. Silan gemäß Beisp. 3 | - | - | - | - | - | 5,8 | - |
| Erf. Silan gemäß Beisp. 4 | - | - | - | - | - | - | 7,3 |

| 2. Stufe | | | | | | | |
|---|---|---|---|---|---|---|---|
| Batch Stufe 1 | | | | | | | |

| 3. Stufe | | | | | | | |
|---|---|---|---|---|---|---|---|
| Batch Stufe 2 | | | | | | | |
| Perkacit TBzTD | 0,2 | 0,2 | 0,2 | 0,2 | 0,2 | 0,2 | 0,2 |
| Vulkacit CZ/EG-C | 1,6 | 1,6 | 1,6 | 1,6 | 1,6 | 1,6 | 1,6 |
| Schwefel | 2,1 | 2,1 | 2,1 | 2,1 | 2,1 | 2,1 | 2,1 |

Bei dem Polymer VSL 5025-2 handelt es sich um ein in Lösung polymerisiertes SBR-Copolymer der Bayer AG, mit einem Styrolgehalt von 25 Gew.-% und einem Vinylanteil von 50 Gew.-%. Das Copolymer enthält 37,5 phr TDAE-Öl und weist eine Mooney-Viskosität (ML 1+4/100°C) von 47 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Evonik Industries AG und besitzt eine BET-Oberfläche von 170 m²/g.

Als TDAE Öl wird Vivatec 500 der Klaus Dahleke KG verwendet, bei Vulkanox 4020 handelt es sich um 6PPD der Lanxess Europe GmbH & Co. KG, bei Vulkanox HS/LG um TMQ der Lanxess und Protektor G3108 ist ein Ozonschutzwachs der Paramelt B.V., bei ZnO RS handelt es sich um ZnO der Arnsperger Chemikalien GmbH, bei EDENOR ST1 GS 2.0 um Palmitin-Stearinsäure der Caldic Deutschland GmbH & Co. KG, bei Aktiplast ST handelt es sich um einen Plastiziser der RheinChemie, der aus einem Blend aus Kohlenwasserstoffen, Zn-Seifen und Füllstoffen besteht. Rhenogran DPG-80 besteht aus 80% DPG auf einem EVA/EPDM Träger der RheinChemie und Vulkacit CZ ist CBS von der Lanxess Europe GmbH & Co. KG. Perkacit TBzTD (Tetrabenzylthiuramdisulfid) ist ein Produkt von Flexsys N.V..

Die Kautschukmischung wird dreistufig in einem Innenmischer gemäß Tabelle 2 hergestellt.

**Tabelle 2:**

| | Stufe 1 |
|---|---|
| Einstellungen | |
| Mischaggregat | Werner & Pfleiderer GK 1,5E |
| Drehzahl | 80 min⁻¹ |
| Stempeldruck | 5,5 bar |
| Durchflußtemp. | 80 °C |

| Mischvorgang | |
|---|---|
| 0 bis 0,5 min | Buna VSL 5025-1 + Buna CB 24 |
| 0,5 min | TMQ, 6PPD |
| 0,5 bis 1 min | mischen |
| 1 bis 2 min | ½ Ultrasil 7000 GR, Silan bzw. oligomere Organosilane, ZnO |
| 2 min | Säubern und lüften |
| 2 bis 3 min | ½ Ultrasil 7000 GR, Protector G3108, Stearinsäure, Vivatec 500, DPG, Plastiziser |
| 3 min | Säubern und lüften |
| 3 bis 4 min | mischen und ausfahren bei 150°-160°C |
| | |

| | Stufe 2 |
|---|---|
| Einstellungen | |
| Mischaggregat | wie in Stufe 1 bis auf: |
| Drehzahl | 90 min⁻¹ |

| Mischvorgang | |
|---|---|
| 0 bis 1 min | Batch Stufe 1 aufbrechen |
| 1 bis 3 min | Mischen bei 155°C |
| 3 min | ausfahren |

| | Stufe 3 |
|---|---|
| Einstellungen | |
| Mischaggregat | wie in Stufe 1 bis auf |
| Drehzahl | 40 min⁻¹ |
| Durchflußtemp. | 50 °C |

| Mischvorgang | |
|---|---|
| 0 bis 0,5 min | Batch Stufe 2 |
| 0,5 bis 2 min | Beschleuniger und Schwefel |
| 2 min | ausfahren und auf Labormischwalzwerk Fell bilden |
| | (Durchmesser 200 mm, Länge 450 mm, Durchflußtemperatur 50°C) |
| | Homogenisieren: |
| | 20 s bei Walzenspalt von 3-4 mm ein Fell bilden lassen, innerhalb von weiteren 40s: 3* links, 3* rechts einschneiden und umklappen sowie |
| | 3* bei engem Walzenspalt (3 mm) stürzen und |
| | anschließend ein Fell ausziehen. |
| Batch-Temp. | <110°C |

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgt gemäß den in Tabelle 3 angegebenen Prüfmethoden.

**Tabelle 3:**

| Physikalische Testung | Norm/ Bedingungen |
|---|---|
| Moving Die Methode: minimales Drehmoment | DIN 53529/3, ISO 6502 |
| Zugversuch am Ring, 23°C *Spannungswerte* | DIN 53504, ISO 37 |
| DIN Abrieb | DIN ISO 4649, ISO 4649 |
| Shore Härte | DIN 53505, ISO 7619-1 |
| Weiterreißwiderstand Die C | ASTM D 624 |
| Ball Rebound 70°C | ASTM D 2632 |
| Viskoelastische Eigenschaften 0 und 60°C, 16 Hz, 50 N Vorkraft und 25 N Amplitudenkraft Komplexer Modul E* (MPa) | DIN 53 513, ISO 2856 |

Die Vulkanisation erfolgt bei einer Temperatur von 165°C und einer Dauer von 15 Minuten. In der Tabelle 4 sind die gummitechnischen Daten für Rohmischung und Vulkanisat angegeben.

**Tabelle 4:**

| Substanz | Ref. kautschukmischung I "in situ" | Ref. kautschukmischung II, "in situ" | Ref. kautschukmischung III, Vergl.-beisp. 5 | Erf. Kautschukmischung I, enth. erf. Beisp. 1 | Erf. Kautschukmischung II, enth. erf.-Beisp. 2 | Erf. Kautschukmischung III, enth. erf. Beisp. 3 | Erf. Kautschukmischung IV, enth. erf.-Beisp. 4 |
|---|---|---|---|---|---|---|---|
| Rohmischungsergebnisse: | | | | | | | |
| Moving Die Methode: minimales Drehmoment nach 3. Stufe [dNm] | 2,3 | | 2,9 | 2,1 | 2,7 | 2,1 | 1,9 |

| Vulkanisatergebnisse: | | | | | | | |
|---|---|---|---|---|---|---|---|
| Spannungswert 50% [MPa] | 1,2 | | 1,05 | 1,15 | 1,2 | 1,1 | 1,1 |
| Spannungswert 200% [MPa] | 7,2 | | 4,8 | 8,9 | 9,2 | 8,3 | 7,6 |
| Verstärkungsindex: Spannungswert 200% / 50% [-] | 6,0 | | 4,6 | 7,7 | 7,7 | 7,5 | 6,9 |
| DIN Abrieb [mm³] | 95 | 105 | 104 | 67 | 61 | 69 | 72 |
| Shore Härte | 60 | 55 | 60 | 56 | 58 | 55 | 58 |
| Ball Rebound 70°C [%] | 65,0 | 68,8 | 63,0 | 72,1 | 71,6 | 70,8 | 70,1 |
| Weiterreißwiderstand Die C [N/mm] | 40,2 | 49 | 33,4 | 36,7 | 44,4 | 40,7 | 37,5 |
| MTS, 16Hz, 50N Vorkraft, 25N Ampl.kraft 0°C [MPa] | 0,454 | 0,412 | 0,476 | 0,449 | 0,478 | 0,462 | 0,474 |
| MTS, 16Hz, 50N Vorkraft, 25N Ampl.kraft 60°C [MPa] | 0,109 | 0,108 | 0,130 | 0,087 | 0,093 | 0,093 | 0,096 |

Die Kautschukmischungen enthaltend die erfindungsgemäßen oligomeren Silane zeigen ein verbessertes Verarbeitungsverhalten (niedrigeres Drehmoment nach der 3. Mischstufe), verbessertes Verstärkungsverhalten (höhere Moduli und besserer Verstärkungsindex), verbesserter Rollwiderstand und verbessertem Weiterreißwiderstand gegenüber der isomolaren in-situ Mischung bzw. des oligomeren Silans gemäß EP 0964021.

## Patentansprüche

1. Oligomere Organosilane, enthaltend mindestens zwei unterschiedliche Struktureinheiten innerhalb eines Moleküls ausgewählt aus den Struktureinheiten A, B, C oder D verknüpft in beliebiger linearer, verzweigter oder zyklischer Anordnung 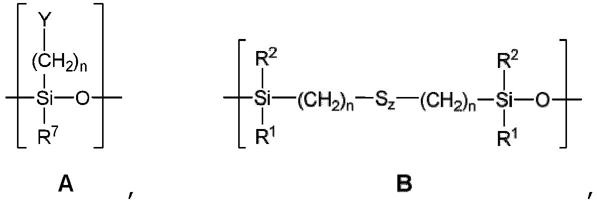 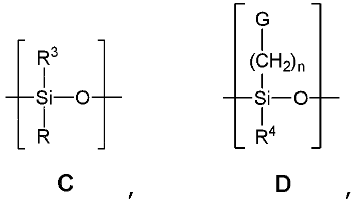
wobei Y = SH oder -Sₓ-(CH₂)ₙSiRR¹R²,
mit n = 1-8,
G = SH oder -Sₓ-(CH₂)ₙSiRR¹R² , wobei G ungleich Y ist, R, R¹, R², R³, R⁴ unabhängig voneinander, OH, (C₁-C₁₆)Alkyl, (C₂-C₁₆)Alkenyl, (C₆-C₁₄)Aryl, (C₁-C₄)Alkoxy, eine OSiR¹R²R³-Gruppe oder eine Alkylpolyethergruppe -O-(R⁵-O)ₘ-R⁶, mit R⁵ gleich oder verschieden, eine verzweigte oder unverzweigte, gesättigte oder ungesättigte, aliphatische zweibindige C1-C30 Kohlenwasserstoffgruppe, m im Mittel 1 bis 30, und R⁶ eine unsubstituierte oder substituierte, verzweigte oder unverzweigte C₁-C₃₀ Alkyl-, C₂-C₃₀ Alkenyl-, eine C₆-C₁₄ Arylgruppe, oder eine C₇-C₄₀ Aralkylgruppe ist,
x im statistischen Mittel 1 - 6,
z im statistischen Mittel 1 - 6,
**dadurch gekennzeichnet, dass** R⁷ eine Alkylpolyethergruppe -O-(R⁵-O)ₘ-R⁶ ist und das oligomere Organosilan die Struktureinheiten A und B und C, A und B, A und D, A und C und D oder A und C enthält und dass das Molekulargewicht der Oligomeren, gemessen mit GPC in Bezug zu einem Standard, bestehend aus einer Mischung von Siloxanen des Vinyltrimethoxysilans, zwischen 400 und 100000 g/mol ist.

2. Oligomere Organosilane gemäß Anspruch 1, **dadurch gekennzeichnet, dass** das oligomere Organosilan die Struktureinheiten A und B und C enthält und in Struktureinheit A, n = 3, Y = SH, in Struktureinheit B, R¹ = Ethoxy oder Alkylpolyethergruppe -O-(R⁵-O)ₘ-R⁶, R² = Ethoxy oder Alkylpolyethergruppe -O-(R⁵-O)ₘ-R⁶, n = 3, z = 2-4, und in Struktureinheit C, R = Phenyl, Propyl oder Oktyl und R³ = Ethoxy oder Alkylpolyethergruppe - O-(R⁵-O)ₘ-R⁶ ist.

3. Oligomere Organosilane gemäß Anspruch 2, wobei das molare Verhältnis des molaren Anteils der Struktureinheit A zur Summe der molaren Anteile der Struktureinheiten B und C größer eins ist.

4. Oligomere Organosilane gemäß Anspruch 1, **dadurch gekennzeichnet, dass** das oligomere Organosilan die Struktureinheiten A und B enthält und in Struktureinheit A, n = 3, Y = SH, in Struktureinheit B, R¹ = Ethoxy oder Alkylpolyethergruppe -O-(R⁵-O)ₘ-R⁶, R² = Ethoxy oder Alkylpolyethergruppe -O-(R⁵-O)ₘ-R⁶, n = 3, z = 2-4 ist.

5. Oligomere Organosilane gemäß Anspruch 4, wobei das molare Verhältnis des molaren Anteils der Struktureinheit A zum molaren Anteil der Struktureinheit B größer eins ist.

6. Oligomere Organosilane gemäß Anspruch 1, **dadurch gekennzeichnet, dass** das oligomere Organosilan die Struktureinheiten A und C enthält und in Struktureinheit A, n = 3, Y = SH, und in Struktureinheit C, R = Phenyl, Propyl oder Oktyl und R³ = Ethoxy oder Alkylpolyethergruppe -O-(R⁵-O)ₙ-R⁶ ist.

7. Oligomere Organosilane gemäß Anspruch 6, wobei das molare Verhältnis des molaren Anteils der Struktureinheit A zum molaren Anteil der Struktureinheit C größer eins ist.

8. Verfahren zur Herstellung der oligomeren Organosilane gemäß einem der Ansprüche 1 bis 7, **dadurch gekennzeichnet, dass** man in einem ersten Verfahrensschritt die Verbindungen der Formel I-IV 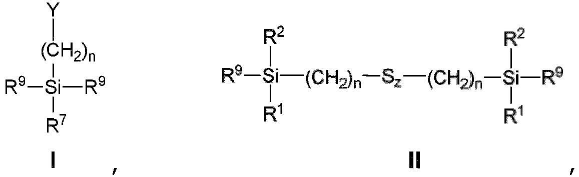 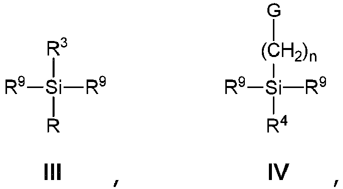 entsprechend der molaren Verhältnisse in Gegenwart von Wasser bei Temperaturen von 0-150°C oligomerisiert/polymerisiert,
und in einem zweiten Verfahrensschritt mit einem Alkylpolyetheralkohol der Formel HO-(R⁵-O)ₘ-R⁶ umsetzt, wobei Y, G, R, R¹, R², R³, R⁴, R⁵, R⁶, R⁷, R⁸, n, m, u, x und z die gleiche Bedeutung wie in Anspruch 1 haben und R⁹ gleich H, F, Cl, Br, I, (C₁-C₁₆)Alkoxy ist.

9. Verfahren zur Herstellung der oligomeren Organosilane gemäß Anspruch 8, **dadurch gekennzeichnet, dass** man die Reaktion in Gegenwart eines Katalysators durchführt.

10. Verfahren zur Herstellung der oligomeren Organosilane gemäß Anspruch 9, **dadurch gekennzeichnet, dass** der Katalysator im ersten Verfahrensschritt HCl und im zweiten Verfahrensschritt Tetrabutylorthotitanat ist.

11. Verfahren zur Herstellung der oligomeren Organosilane gemäß den Ansprüchen 8 bis 10, **dadurch gekennzeichnet, dass** man die Reaktion in einem Lösungsmittel durchführt.

12. Verfahren zur Herstellung der oligomeren Organosilane gemäß Anspruch 11, **dadurch gekennzeichnet, dass** das Lösungsmittel Essigsäureethylester oder Ethanol ist.

13. Verwendung der oligomeren Organosilane gemäß einem der Ansprüche 1 bis 7 in Kautschukmischungen.

14. Kautschukmischungen, enthaltend ein oligomeres Organosilan gemäß einem der Ansprüche 1 bis 7.

15. Kautschukmischungen gemäß Anspruch 14, **dadurch gekennzeichnet, dass** das oligomere Organosilan in einer Menge von 0,1 bis 15 Gew.% bezogen auf die Menge des eingesetzten Kautschuks eingesetzt wird.

16. Verwendung der Kautschukmischung gemäß einem der Ansprüche 14 oder 15 zur Herstellung von Reifen, Profile, Kabelmänteln, Schläuchen, Treibriemen, Förderbänder, Reifenbeläge, Schuhsohlen, Dichtungsringe und Dämpfungselemente.

## Claims

1. Oligomeric organosilane containing at least two different structural units within a molecule, selected from the structural units A, B, C and D joined in any desired linear, branched or cyclic arrangement, 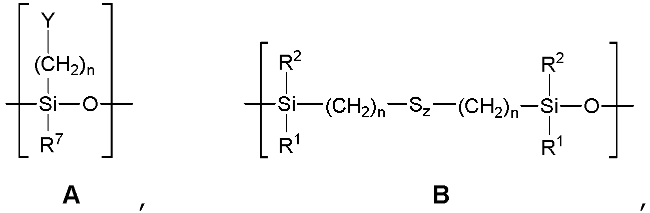 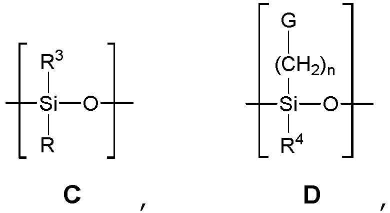
where Y = SH or -Sₓ- (CH₂)SiRR¹R²,
with n = 1-8,
G = SH or -Sₓ-(CH₂)ₙSiRR¹R², with G different from Y, R, R¹, R², R³, R⁴ are each independently OH, (C₁-C₁₆) alkyl, (C₂-C₁₆) alkenyl, (C₆-C₁₄) aryl, (C₁-C₄) alkoxy, an OSiR¹R²R³ group or an alkyl polyether group -O- (R⁵-O)ₘ-R⁶, where R⁵ is the same or different and is a branched or unbranched, saturated or unsaturated, aliphatic divalent C1-C30 hydrocarbon group, m on average is 1 to 30, and R⁶ is an unsubstituted or substituted, branched or unbranched C₁-C₃₀ alkyl group, C₂-C₃₀ alkenyl group, a C₆-C₁₄ aryl group, or a C₇-C₄₀ aralkyl group,
x on statistical average is 1 - 6,
z on statistical average is 1 - 6,
**characterized in that** R⁷ is an alkyl polyether group -O-(R⁵-O)ₘ-R⁶ and the oligomeric organosilane contains structural units A and B and C, A and B, A and D, A and C and D, or A and C, and
**in that** the molecular weight of the oligomers, measured by GPC in relation to a standard, consisting of a mixture of siloxanes of vinyltrimethoxysilane, is between 400 and 100 000 g/mol.

2. Oligomeric organosilane according to Claim 1, **characterized in that** the oligomeric organosilane contains structural units A and B and C, and, in structural unit A, n = 3, Y = SH, in structural unit B, R¹ = ethoxy or alkyl polyether group -O-(R⁵-O)ₘ-R⁶, R² = ethoxy or alkyl polyether group -O-(R⁵-O)ₘ-R⁶, n = 3, z = 2-4, and, in structural unit C, R = phenyl, propyl or octyl and R³ = ethoxy or alkyl polyether group -O-(R⁵-O)ₘ-R⁶.

3. Oligomeric organosilane according to Claim 2, wherein the molar ratio of the molar proportion of the structural unit A to the sum total of the molar proportions of the structural units B and C is greater than one.

4. Oligomeric organosilane according to Claim 1, **characterized in that** the oligomeric organosilane contains structural units A and B, and, in structural unit A, n = 3, Y = SH, in structural unit B, R¹ = ethoxy or alkyl polyether group -O-(R⁵-O)ₘ-R⁶, R² = ethoxy or alkyl polyether group -O-(R⁵-O)ₘ-R⁶, n = 3, z = 2-4.

5. Oligomeric organosilane according to Claim 4, wherein the molar ratio of the molar proportion of the structural unit A to the molar proportion of the structural unit B is greater than one.

6. Oligomeric organosilane according to Claim 1, **characterized in that** the oligomeric organosilane contains structural units A and C, and, in structural unit A, n = 3, Y = SH, and, in structural unit C, R = phenyl, propyl or octyl and R³ = ethoxy or alkyl polyether group -O-(R⁵-O)ₘ-R⁶.

7. Oligomeric organosilane according to Claim 6, wherein the molar ratio of the molar proportion of the structural unit A to the molar proportion of the structural unit C is greater than one.

8. Process for preparing the oligomeric organosilanes according to any of Claims 1 to 7, **characterized in that**, in a first process step, the compounds of the formula I-IV 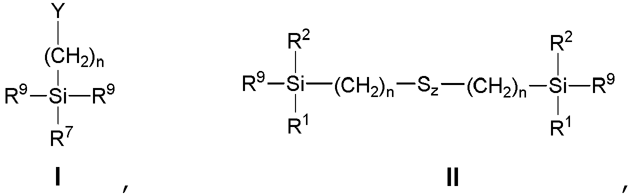 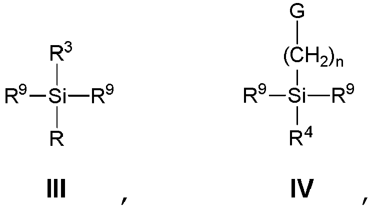 are oligomerized/polymerized according to the molar ratios in the presence of water at temperatures of 0-150°C,
and, in a second process step, reacted with an alkyl polyether alcohol of the formula HO-(R⁵-O)ₘ-R⁶, where Y, G, R, R¹, R², R³, R⁴, R⁵, R⁶, R⁷, R⁸, n, m, u, x and z are each as defined in Claim 1 and R⁹ is H, F, Cl, Br, I, (C₁-C₁₆) alkoxy.

9. Process for preparing the oligomeric organosilanes according to Claim 8, **characterized in that** the reaction is conducted in the presence of a catalyst.

10. Process for preparing the oligomeric organosilanes according to Claim 9, **characterized in that** the catalyst in the first process step is HCl and that in the second process step is tetrabutyl orthotitanate.

11. Process for preparing the oligomeric organosilanes according to Claims 8 to 10, **characterized in that** the reaction is conducted in a solvent.

12. Process for preparing the oligomeric organosilanes according to Claim 11, **characterized in that** the solvent is ethyl acetate or ethanol.

13. Use of the oligomeric organosilanes according to any of Claims 1 to 7 in rubber mixtures.

14. Rubber mixture comprising an oligomeric organosilane according to any of Claims 1 to 7.

15. Rubber mixture according to Claim 14, **characterized in that** the oligomeric organosilane is used in an amount of 0.1 to 15% by weight, based on the amount of rubber used.

16. Use of the rubber mixture according to either of Claims 14 and 15 for production of tyres, profiles, cable sheaths, hoses, drive belts, conveyor belts, tyre covers, shoe soles, gasket rings and damping elements.

## Revendications

1. Organosilanes oligomériques, contenant au moins deux motifs structuraux différents dans une molécule choisis parmi les motifs structuraux A, B, C ou D reliés en un quelconque ordre linéaire, ramifié ou cyclique 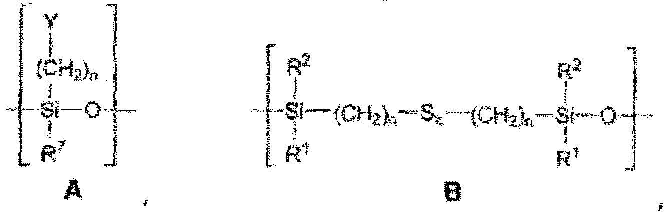 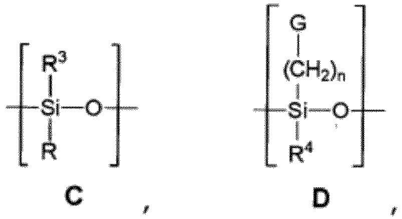
Y = SH ou -Sₓ- (CH₂)ₙSiRR¹R²,
avec n = 1 à 8,
G = SH ou -Sₓ-(CH₂)ₙSiRR¹R², G étant différent de Y, R, R¹, R², R³, R⁴ indépendamment les uns des autres étant OH, C₁₋₁₆-alkyle, C₂₋₁₆-alcényle, C₆₋₁₄-aryle, C₁₋₄-alcoxy, un groupe OSiR¹R²R³ ou un groupe alkylpolyéther -O-(R⁵-O)ₘ-R⁶, R⁵ étant, identique ou différent, un groupe hydrocarboné en C₁₋₃₀ aliphatique divalent, ramifié ou non ramifié, saturé ou insaturé, m étant en moyenne 1 à 30, et R⁶ étant un groupe C₁₋₃₀-alkyle, un groupe C₂₋₃₀-alcényle, un groupe C₆₋₁₄-aryle, ou un groupe C₇₋₄₀-aralkyle non substitué ou substitué, ramifié ou non ramifié,
x étant en moyenne statistique 1 à 6,
z étant en moyenne statistique 1 à 6,
**caractérisés en ce que** R⁷ est un groupe alkylpolyéther -O-(R⁵-O)ₘ-R⁶ et l'organosilane oligomérique contient les motifs structuraux A et B et C, A et B, A et D, A et C et D ou A et C et que le poids moléculaire des oligomères, mesuré par CPG par rapport à une référence standard, constitués d'un mélange de siloxanes du vinyltriméthoxysilane, est compris entre 400 et 100 000 g/mole.

2. Organosilanes oligomériques selon la revendication 1, **caractérisés en ce que** l'organosilane oligomérique contient les motifs structuraux A et B et C et dans le motif structural A, n = 3, Y = SH, dans le motif structural B, R¹ = groupe éthoxy ou groupe alkylpolyéther -O-(R⁵-O)ₘ-R⁶, R² = groupe éthoxy ou groupe alkylpolyéther -O- (R⁵-O)ₘ-R⁶, n = 3, z = 2 à 4, et dans le motif structural C, R = phényle, propyle ou octyle et R³ = groupe éthoxy ou groupe alkylpolyéther -O-(R⁵-O)ₘ-R⁶.

3. Organosilanes oligomériques selon la revendication 2, le rapport molaire de la proportion molaire du motif structural A à la somme des proportions molaires des motifs structuraux B et C étant supérieur à un.

4. Organosilanes oligomériques selon la revendication 1, **caractérisés en ce que** l'organosilane oligomérique contient les motifs structuraux A et B est dans le motif structural A, n = 3, Y = SH, dans le motif structural B, R¹ = groupe éthoxy ou groupe alkylpolyéther -O-(R⁵-O)ₘ-R⁶, R² = groupe éthoxy ou groupe alkylpolyéther -O-(R⁵-O)ₘ-R⁶, n = 3, z = 2 à 4.

5. Organosilanes oligomériques selon la revendication 4, le rapport molaire de la proportion molaire du motif structural A à la proportion molaire du motif structural B étant supérieur à un.

6. Organosilanes oligomériques selon la revendication 1, **caractérisés en ce que** l'organosilane oligomérique contient les motifs structuraux A et C et dans le motif structural A, n = 3, Y = SH, et dans le motif structural C, R = phényle, propyle ou octyle et R³ = groupe éthoxy ou groupe alkylpolyéther -O- (R⁵-O)ₘ-R⁶.

7. Organosilanes oligomériques selon la revendication 6, le rapport molaire de la proportion molaire du motif structural A à la proportion molaire du motif structural C étant supérieur à un.

8. Procédé pour la préparation des organosilanes oligomériques selon l'une quelconque des revendications 1 à 7, **caractérisé en ce que**, dans une première étape de procédé, on oligomérise/polymérise les composés de formule I à IV 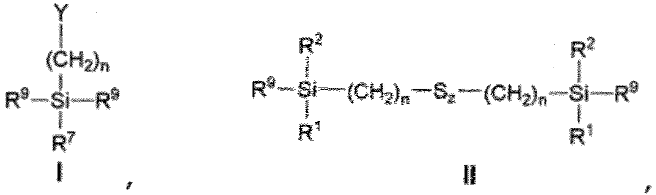 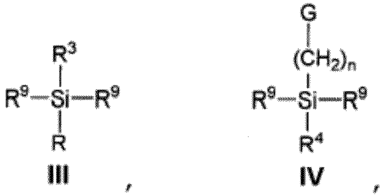 selon les rapports molaires en présence d'eau à des températures de 0 à 150 °C,
et, dans une deuxième étape de procédé, on transforme avec un alcool d'alkylpolyéther de formule HO-(R⁵-O)ₘ-R⁶, Y, G, R, R¹, R², R³, R⁴, R⁵, R⁶, R⁷, R⁸, n, m, u, x et z possédant la même signification que dans la revendication 1 et R⁹ étant égal à H, F, Cl, Br, I, C₁₋₁₆-alcoxy.

9. Procédé pour la préparation des organosilanes oligomériques selon la revendication 8, **caractérisé en ce qu'**on effectue la réaction en présence d'un catalyseur.

10. Procédé pour la préparation des organosilanes oligomériques selon la revendication 9, **caractérisé en ce que** le catalyseur dans la première étape de procédé est HCl et est l'orthotitanate de tétrabutyle dans la deuxième étape de procédé.

11. Procédé pour la préparation des organosilanes oligomériques selon les revendications 8 à 10, **caractérisé en ce qu'**on effectue la réaction dans un solvant.

12. Procédé pour la préparation des organosilanes oligomériques selon la revendication 11, **caractérisé en ce que** le solvant est l'acétate d'éthyle ou l'éthanol.

13. Utilisation des organosilanes oligomériques selon l'une quelconque des revendications 1 à 7 dans des mélanges de caoutchouc.

14. Mélanges de caoutchouc, contenant un organosilane oligomérique selon l'une quelconque des revendications 1 à 7.

15. Mélanges de caoutchouc selon la revendication 14, **caractérisé en ce que** l'organosilane oligomérique est utilisé en une quantité de 0,1 à 15 % en poids par rapport à la quantité de caoutchouc utilisée.

16. Utilisation du mélange de caoutchouc selon l'une quelconque des revendications 14 et 15 pour la préparation de pneus, de profil, de gaines de câble, de tuyaux, de courroies d'entraînement, de bandes de transport, de revêtements de pneus, de semelles de chaussures, d'anneaux d'étanchéité et d'éléments d'amortissement.
